# EUROPÄISCHE PATENTSCHRIFT

(11) **EP 1 794 474 B1**
(45) Veröffentlichungstag und Bekanntmachung des Hinweises auf die Patenterteilung: **19.08.2009**
(21) Anmeldenummer: 05777973.8
(22) Anmeldetag: 03.09.2005
(51) Int. Cl.: F16H 7/12, F16H 7/14

(54) **ZUGMITTELTRIEB, INSBESONDERE FÜR EINEN VERBRENNUNGSMOTOR**
TRACTION MECHANISM DRIVE, ESPECIALLY FOR A COMBUSTION ENGINE
COMMANDE DE MECANISME DE TRACTION UTILISE EN PARTICULIER POUR UN MOTEUR

(30) Priorität: 02.10.2004 DE 102004048069
(43) Veröffentlichungstag der Anmeldung: 13.06.2007
(73) Patentinhaber: Schaeffler KG, 91074 Herzogenaurach (DE)
(72) Erfinder: PAINTA, Ralph, 91469 Hagenbüchach (DE); BOGNER, Michael, 90542 Eckental (DE); GRAF, Herbert, 96120 Bischberg (DE); ARNETH, Roland, 91330 Eggolsheim (DE)
(86) Internationale Anmeldenummer: PCT/EP2005/009507
(87) Internationale Veröffentlichungsnummer: WO 2006/037411

(56) Entgegenhaltungen:
- WO-A-20/04083681
- WO-A-20/04083682
- DE-A1- 10 159 072
- DE-C1- 3 642 430

## Beschreibung

### Gebiet der Erfindung

Die Erfindung betrifft einen Zugmitteltrieb, insbesondere für einen Verbrennungsmotor, mit den Merkmalen des Oberbegriffs des Anspruchs 1.

### Hintergrund der Erfindung

Derartige Zugmitteltriebe dienen zum Antrieb von Aggregaten oder Nebenaggregaten, wie beispielsweise eine Wasserpumpe, ein Klimakompressor, eine Lenkhilfspumpe, ein Startergenerator oder ein Generator. Als Zugmittel wird zumeist ein Endlosriemen eingesetzt, der auf Riemenscheiben der einzelnen Aggregate läuft. Es ist auch bekannt, eine Spannvorrichtung oder ein Spannsystem vorzusehen, bei dem wenigstens eine Spannrolle eingesetzt wird, um dem Zugmittel eine Vorspannung aufzuprägen. Dabei sind mechanische als auch hydraulisch wirkende Spannvorrichtungen gebräuchlich, die teilweise auch zur Dämpfung von Schwingungen eingesetzt werden.

Bei Zugmitteltrieben, die einen Startergenerator, der auch als Anlassergenerator bezeichnet wird, als Aggregat umfassen, findet beim Wechsel zwischen Motorbetrieb einerseits und Anlasserbetrieb andererseits ein Wechsel zwischen Zugtrum und Lostrum an beiden Seiten der Riemenscheibe des Startergenerators statt.

Aus dem gattungsgemäßen Dokument WO 2004/083682 A ist ein Zugmitteltrieb mit einem Zugmittel bekannt, der um mehrere Riemenscheiben geschlungen ist, von denen eine mit der Welle eines Startergenerators verbunden ist. Um in verschiedenen Betriebszuständen eine ausreichende Spannung des Zugmittels sicherzustellen, ist eine Spannvorrichtung vorgesehen, die ein Federmittel aufweist, das an einem Ende an dem Startergenerator und mit seinem anderen Ende an einem schwenkbar gelagerten Winkelhebel befestigt ist. Über eine Schraube, die in ein Langloch eingreift, kann der Winkelhebel positioniert werden, um eine bestimmte Vorspannkraft des Zugmittels einzustellen.

In der DE 100 57 818 A1 wird ein Zugmitteltrieb für den Antrieb eines Startergenerators beschrieben. Der Startergenerator ist einerseits über ein Lagerauge schwenkbar an dem Gehäuse einer Brennkraftmaschine gelagert. Über ein weiteres Lagerauge ist der Startergenerator mit einem Federelement verbunden, dessen anderes Ende ebenfalls am Gehäuse des Motors gelagert ist. Die Montage eines derartigen Zugmitteltriebs gestaltet sich jedoch schwierig, da der Schwenkwinkel des üblicherweise als Federelement eingesetzten Hydraulikelements begrenzt ist. Da alle Komponenten des Zugmitteltriebs Toleranzen aufweisen, kann es in Einzelfällen schwierig sein, den Riemen zu montieren.

### Zusammenfassung der Erfindung

Der Erfindung liegt daher das Problem zugrunde, einen Zugmitteltrieb zu schaffen, der eine einfachere Montage ermöglicht.

Zur Lösung dieses Problems ist ein Zugmitteltrieb mit den Merkmalen des Anspruchs 1 vorgesehen. Der erfindungsgemäße Zugmitteltrieb weist eine zusätzliche Verstell- oder Einstellmöglichkeit auf, die genutzt werden kann, um dem Zugmitteltrieb bei der Montage die erforderliche Vorspannkraft durch das Federelement aufzuprägen.

Ferner ermöglicht es die erfindungsgemäß vorhandene relative Verstellbarkeit gegenüber dem Gehäuse, das Federelement zunächst zu fixieren, anschließend kann der gehäuseseitige Lagerpunkt des Federelements verstellt werden, um die Vorspannkraft zu erzeugen. Der erfindungsgemäße Zugmitteltrieb ermöglicht auch eine bessere Kompensation der im Riementrieb vorhandenen Toleranzen.

Erfindungsgemäß kann die Verstellbarkeit des Lagerpunkts des Federelements durch Verdrehen und/oder Verschwenken und/oder Verschieben realisiert werden. Von diesen Möglichkeiten wird ein verschiebbarer Lagerpunkt besonders bevorzugt.

Es ist vorgesehen, dass das Federelement an einer an dem Gehäuse des Verbrennungsmotors angebrachten oder anbringbaren Haltevorrichtung befestigbar ist. Da das Federelement nicht direkt an dem Motorblock, sondern an der zwischengeschalteten Haltevorrichtung befestigt ist, ergeben sich wesentlich erweiterte und verbesserte Befestigungs- und Montagemöglichkeiten. Die Haltevorrichtung kann beispielsweise an dem Motorblock verschraubt werden, die Befestigung des Federelements kann dann in weiten Grenzen an den jeweiligen Anwendungsfall angepasst werden. Es kann auch vorgesehen sein, dass die Haltevorrichtung an einem Abstützelement befestigt ist, sodass sie indirekt an dem Motorblock angebracht ist.

Es ist vorgesehen, dass die Haltevorrichtung als Haltebügel ausgebildet ist, wobei das Federelement zwischen den an dem Gehäuse der Brennkraftmaschine befestigten Endabschnitten des Haltebügels anbringbar oder angebracht ist. Wenn ein derartiger Haltebügel verwendet wird, genügen zwei Befestigungspunkte am Motorgehäuse, so dass der Haltebügel verhältnismäßig einfach an verschiedene Motoren angepasst werden kann.

Gemäß einer ersten Ausgestaltung des erfindungsgemäßen Zugmitteltriebs kann es vorgesehen sein, dass ein Endabschnitt des Haltebügels derart mittels eines Befestigungsmittels befestigbar ist, dass der das Federelement tragende Haltebügel zum Spannen des Zugmitteltriebs verschoben wird. Auf diese Weise wird der Zugmitteltrieb automatisch gespannt, wenn der Haltebügel befestigt wird. Zu diesem Zweck kann an einem Endabschnitt des Haltebügels ein Langloch ausgebildet sein, in dem ein Befestigungsmittel geführt ist. Wenn derjenige Endabschnitt des Haltebügels, der dem Langloch gegenüberliegt, befestigt wird, wird das Befestigungsmittel entlang des Langlochs verschoben, so dass auch das an dem Haltebügel angebrachte Federelement verschoben wird, wodurch der Zugmitteltrieb gespannt wird. Eine besonders zuverlässige Befestigung ergibt sich, wenn die Längsachse des Langlochs parallel zur Längsachse des an dem anderen Endabschnitt angebrachten Befestigungsmittels angeordnet ist.

Gemäß einer zweiten Ausgestaltung der Erfindung kann es vorgesehen sein, dass das Federelement an einem Hebelarm eines an dem Haltebügel schwenkbar gelagerten Hebels angebracht ist, der durch ein an dem anderen Hebelarm angreifendes Betätigungsmittel bewegbar ist, um den Zugmitteltrieb zu spannen. Der vorzugsweise zweiarmig ausgebildete Hebel kann in seinem mittleren Bereich gelagert sein, wobei ein Hebelarm mit dem Federelement verbunden ist und das Betätigungsmittel auf den anderen Hebelarm einwirkt. Es ist zweckmäßig, dass das Betätigungsmittel als Schraube ausgebildet ist, die in eine mit einem Gewinde versehene, an dem Haltebügel angebrachte Durchgangsbohrung einschraubbar ist. Nach der Befestigung des Haltebügels an dem Gehäuse des Verbrennungsmotors wird die Schraube in die Durchgangsbohrung geschraubt, so dass der Hebel von dem Endabschnitt der Schraube betätigt wird.

Gemäß einer dritten Ausgestaltung der Erfindung kann es vorgesehen sein, dass das Federelement an einem an der Haltevorrichtung angebrachten Träger befestigt ist, der zum Spannen des Zugmitteltriebs relativ zu der Haltevorrichtung verschiebbar ist. Es ist besonders zweckmäßig, wenn der Träger ein Langloch aufweist, in dem ein erstes Befestigungsmittel geführt ist und der Träger durch die Betätigung eines zweiten Befestigungsmittels verschiebbar ist. Es kann auch vorgesehen sein, dass die Längsachse des Langlochs parallel zur Längsachse des zweiten Befestigungsmittels angeordnet ist. Die Befestigungsmittel können als Schrauben ausgebildet sein.

### Kurze Beschreibung der Zeichnungen

Weitere Vorteile und Einzelheiten der Erfindung ergeben sich aus der nachfolgenden Beschreibung von Ausführungsbeispielen sowie anhand der Figuren. Die Figuren sind schematische Darstellungen und zeigen:
- Fig. 1: die wesentlichen Komponenten eines Zugmitteltriebs gemäß dem Stand der Technik;
- Fig. 2: ein erstes Ausführungsbeispiel der Erfindung, bei dem das Federelement an einem bei der Montage verschiebbaren Haltebügel angebracht ist;
- Fig. 3 und 4: ein zweites Ausführungsbeispiel der Erfindung, bei dem das Federelement an einem drehbar gelagerten Hebel angebracht ist; und
- Fig. 5 und 6: ein drittes Ausführungsbeispiel der Erfindung, bei dem das Federelement an einem verschiebbaren Träger angebracht ist.

### Detaillierte Beschreibung der Zeichnungen

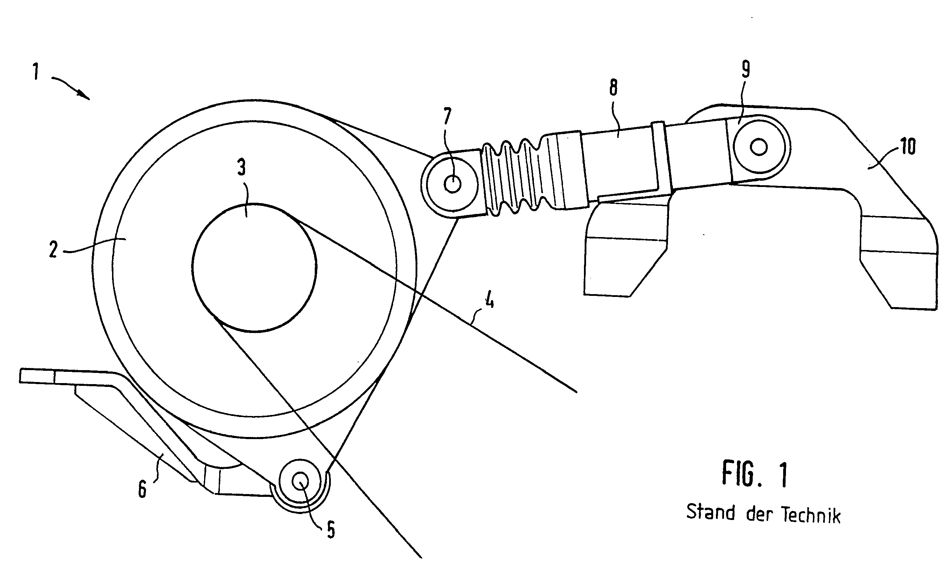

Fig. 1 zeigt die wesentlichen Komponenten eines Zugmitteltriebs 1 gemäß dem Stand der Technik. Der Zugmitteltrieb 1 besteht im Wesentlichen aus einem Startergenerator 2 als Aggregat, dessen Welle eine Riemenscheibe 3 aufweist. Ein als Riemen 4 ausgebildetes Umschlingungsmittel ist mit einer in Fig. 1 nicht dargestellten Riemenscheibe einer Kurbelwelle einer Brennkraftmaschine sowie gegebenenfalls mit weiteren Aggregaten verbunden. Der Aufbau und die Funktion derartiger Zugmitteltriebe ist bekannt, eine nähere Erläuterung ist daher nicht erforderlich.

Der Startergenerator 2 wird wie ein herkömmlicher Generator durch eine an der Kurbelwelle des Verbrennungsmotors angebrachte Riemenscheibe angetrieben, so dass er die für den Betrieb eines Kraftfahrzeugs benötigte elektrische Energie erzeugt (Normalbetrieb). Andererseits kann der Startergenerator 2 auch zum Starten der Brennkraftmaschine eingesetzt werden, indem die Riemenscheibe 3 des Startergenerators 2 als antreibendes Rad des Zugmitteltriebs 1 eingesetzt wird und die Kurbelwelle des Motors dreht, wodurch der Motor angelassen wird (Startbetrieb).

Der Startergenerator 2 ist über ein erstes Lagerauge 5 mit einer ortsfest an dem Gehäuse des Verbrennungsmotors angebrachten Halterung 6 verbunden. Bei anderen Ausführungen kann das Lagerauge 5 auch direkt an dem Motorblock befestigt sein.

An einem zweiten Lagerauge 7 des Startergenerators 2 ist ein Federelement, das in dem dargestellten Ausführungsbeispiel als hydraulisches Spannelement 8 ausgebildet ist, angebracht. Der gegenüberliegende Endabschnitt 9 des Spannelements 8 ist gelenkig an einer Haltevorrichtung 10 angebracht, die an dem Motorblock des Verbrennungsmotors befestigt ist.

Das Spannelement 8 übt auf den Startergenerator 2 und damit auf den Riemen 4 eine Kraft aus, so dass sowohl beim Normalbetrieb als auch beim Startbetrieb die erforderliche Vorspannung des Zugmittels erzeugt wird.

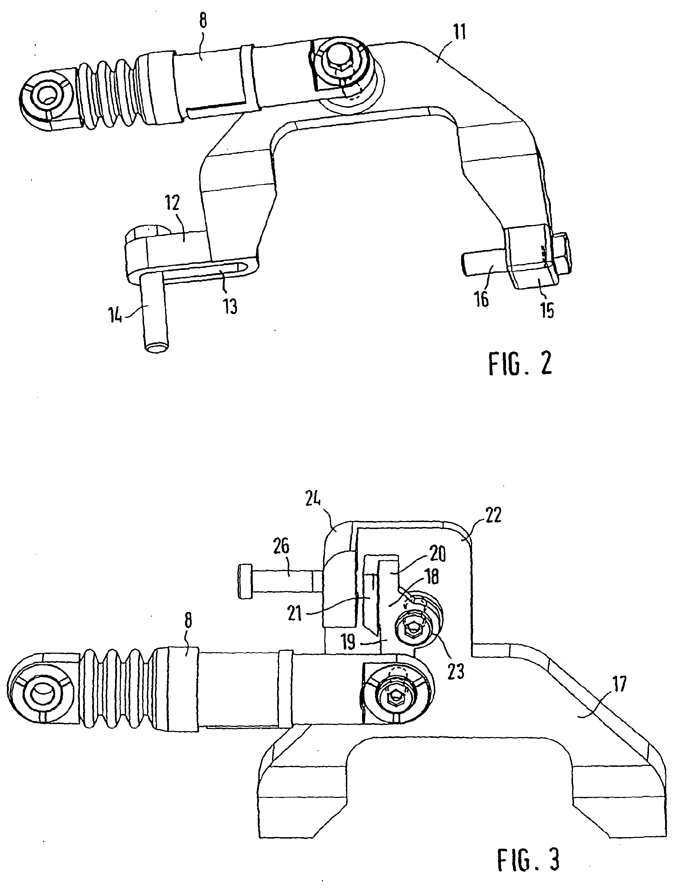

Fig. 2 zeigt ein erstes Ausführungsbeispiel der Erfindung, bei dem das Feder-oder Spannelement an einem bei der Montage des Zugmitteltriebs verschiebbaren Haltebügel angebracht ist.

Der Haltebügel 11 ist ähnlich wie die in Fig. 1 dargestellte Haltevorrichtung 10 aufgebaut. An einem Endabschnitt 12 des Haltebügels 11 befindet sich ein Langloch 13, in dem ein als Schraube 14 ausgebildetes Befestigungsmittel geführt ist. Bei der Montage des Zugmitteltriebs 1 wird die Schraube 14 in eine Gewindebohrung des nicht dargestellten Motorgehäuses geschraubt.

An dem gegenüberliegenden Endabschnitt 15 des Haltebügels 11 befindet sich eine Bohrung für eine Schraube 16, die wie die Schraube 14 in eine Gewindebohrung des Motorblocks geschraubt werden kann. An dem mittleren Teil des Haltebügels 11 zwischen den Endabschnitten 12, 15 ist das Spannelement 8 gelenkig angebracht. Bei anderen Ausführungen kann das Spannelement auch starr angebracht sein.

Bei der Montage wird die Schraube 14 zunächst etwas in die Gewindebohrung eingeschraubt, der Schraubenschaft kann sich jedoch entlang des Langlochs 13 bewegen. Anschließend wird die Schraube 16 fest angezogen, z.B. mit einem Druckluftschrauber. Durch das Festschrauben der Schraube 16 wird der gesamte Haltebügel verschoben, da der Schraubenkopf der Schraube 16 an dem Endabschnitt 15 des Haltebügels 11 anliegt. In der in Fig. 2 gezeigten Ansicht wird der Haltebügel 11 beim Befestigen der Schraube 16 nach links verschoben. Der andere Endabschnitt 12 des Haltebügels 11 bewegt sich dementsprechend mit, wobei das Langloch 13 relativ zu der Schraube 14 verschoben wird. Anschließend kann die Schraube 14 fest angezogen werden. Durch die Verschiebung des Haltebügels 11 wird gleichzeitig das Spannelement 8, das einerseits an dem Haltebügel 11 und andererseits an dem Lagerauge 7 des Startergenerators 2 befestigt ist, derart verschoben, dass die Spannung des Riemens erhöht wird.

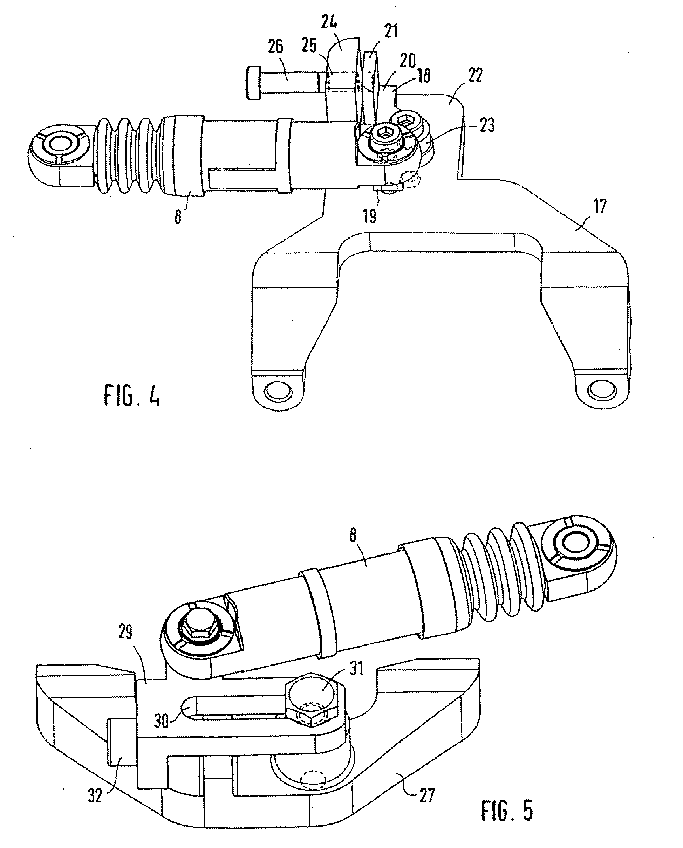

Figuren 3 und 4 zeigen ein zweites Ausführungsbeispiel, bei dem das Feder-oder Spannelement an einem drehbar gelagerten Hebel angebracht ist.

In den Figuren 3 und 4 ist ein Haltebügel 17 gezeigt, an dem ein Hebel 18 drehbar gelagert ist. Der Hebel 18 besitzt einen ersten Hebelarm 19, der in den Figuren 3 und 4 weitgehend von dem Spannelement 8 verdeckt ist. Das Spannelement 8 ist drehbar an dem Hebelarm 19 gelagert. Der Hebel 18 weist einen zweiten Hebelarm 20 auf, der dem ersten Hebelarm 19 gegenüberliegt. An dem Hebelarm 20 ist ein abgewinkelter Abschnitt 21 ausgebildet.

Der Haltebügel 17 weist einen Vorsprung 22 auf, auf dem sich die Lagerung 23 des Hebels 18 befindet. Daneben befindet sich im Eckbereich des Vorsprungs 22 ein abgewinkelter Abschnitt 24, der näherungsweise parallel zu dem abgewinkelten Abschnitt 21 des Hebels 18 ausgebildet ist. Der abgewinkelte Abschnitts 24 weist eine durchgehende Gewindebohrung 25 auf, in die eine Schraube 26 eingeschraubt werden kann. Wenn die Schraube 26 in die Gewindebohrung 25 geschraubt wird, tritt das Ende der Schraube 26 an der gegenüberliegenden Seite des abgewinkelten Abschnitts 24 heraus und berührt den abgewinkelten Abschnitt 21 des Hebels 18. Schraubt man die Schraube 26 weiter hinein, dann wird der Hebel 18 um die als Drehpunkt dienende Lagerung 23 im Uhrzeigersinn gedreht. Entsprechend wird auch der gegenüberliegende Hebelarm 19 gedreht, so dass das Spannelement 8 verschoben wird, wodurch dem Zugmitteltrieb die gewünschte Vorspannkraft aufgeprägt wird.

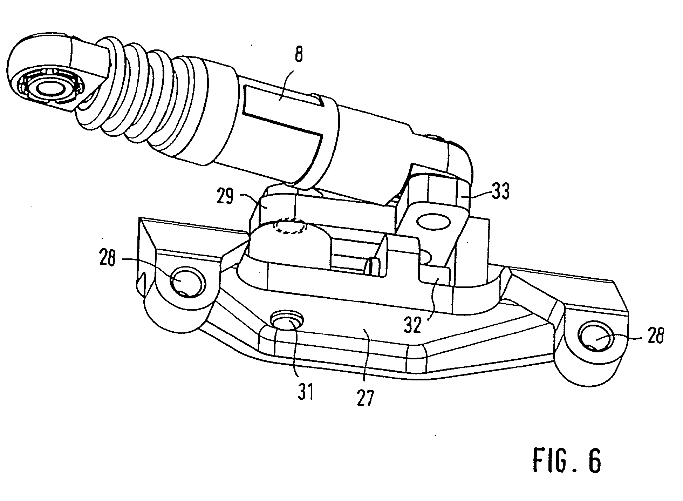

Figuren 5 und 6 zeigen ein drittes Ausführungsbeispiel der Erfindung, bei dem das Feder- oder Spannelement an einem verschiebbaren Träger angebracht ist.

Eine Haltevorrichtung 27 ist an Befestigungslöchern 28 ortsfest an dem Gehäuse der Brennkraftmaschine angebracht. An der Haltevorrichtung 27 ist ein Träger 29 verschiebbar angebracht. Der Träger 29 weist ein Langloch 30 auf, in dem eine Schraube 31 geführt ist. Die Schraube 31 wird bei der Montage zunächst etwas in eine Gewindebohrung der Haltevorrichtung 27 eingeschraubt, jedoch nur so stark, dass der Träger 29 noch entlang des Langlochs 30 verschoben werden kann.

Eine zweite Schraube 32 wird in eine in der Haltevorrichtung 27 vorgesehene Gewindebohrung eingeschraubt, wobei die Längsachse der Schraube 32 mit der Längsachse des Langlochs 30 übereinstimmt. Der Kopf der Schraube 32 liegt seitlich an dem Träger 29 an, wie am besten in Fig. 5 zu sehen ist. Beim Einschrauben der Schraube 32 wird der Träger 29 zusammen mit der Schraube 32 verschoben. Da sich in dem Langloch 30 die Schraube 31 befindet, wird der Träger 29 parallel zur Längsachse des Langlochs 30 verschoben.

An einem Vorsprung 33 des Trägers 29 ist das Spannelement 8 drehbar befestigt. Beim Eindrehen der Schraube 32 wird das Spannelement 8 gemeinsam mit dem Träger 29 linear verschoben, so dass der Zugmitteltrieb gespannt wird.

### Bezugszahlen

- 1: Zugmitteltrieb
- 2: Startergenerator
- 3: Riemenscheibe
- 4: Riemen
- 5: Lagerauge
- 6: Halterung
- 7: Lagerauge
- 8: Spannelement
- 9: Endabschnitt
- 10: Haltevorrichtung
- 11: Haltebügel
- 12: Endabschnitt
- 13: Langloch
- 14: Schraube
- 15: Endabschnitt
- 16: Schraube
- 17: Haltebügel
- 18: Hebel
- 19: Hebelarm
- 20: Hebelarm
- 21: Abschnitt
- 22: Vorsprung
- 23: Lagerung
- 24: Abschnitt
- 25: Gewindebohrung
- 26: Schraube
- 27: Haltevorrichtung
- 28: Befestigungslöcher
- 29: Träger
- 30: Langloch
- 31: Schraube
- 32: Schraube
- 33: Vorsprung

## Patentansprüche

1. Zugmitteltrieb, insbesondere für einen Verbrennungsmotor, mit einem Umschlingungsmittel und wenigstens zwei Riemenscheiben, von denen eine mit der Welle eines Aggregats verbunden ist, das einerseits schwenkbar an dem Gehäuse des Verbrennungsmotors gelagert und andererseits an einem Ende eines eine Vorspannkraft erzeugenden Feder- oder Spannelements (8) abgestützt ist, dessen Lagerpunkt relativ zu dem Gehäuse des Verbrennungsmotors verstellbar ist, wobei das Feder- oder Spannelement (8) an einer an dem Gehäuse des Verbrennungsmotors angebrachten oder anbringbaren Haltevorrichtung (27) befestigbar ist, **dadurch gekennzeichnet, dass** die Haltevorrichtung (27) als C-förmiger Haltebügel (11, 17) ausgebildet und das Feder- oder Spannelement (8) zwischen den an dem Gehäuse der Brennkraftmaschine befestigten Endabschnitten (12, 15) des C-fömigen Haltebügels (11, 17) anbringbar oder angebracht ist.

2. Zugmitteltrieb nach Anspruch 1, **dadurch gekennzeichnet, dass** der Lagerpunkt des Feder- oder Spannelements (8) verschiebbar und/oder verschwenkbar und/oder verdrehbar ist.

3. Zugmitteltrieb nach Anspruch 1, **dadurch gekennzeichnet, dass** ein Endabschnitt (15) der Haltevorrichtung derart mittels eines Befestigungsmittels befestigbar ist, dass die das Feder- oder Spannelement (8) tragende Haltevorrichtung zum Spannen des Zugmitteltriebs verschoben wird.

4. Zugmitteltrieb nach Anspruch 3, **dadurch gekennzeichnet, dass** an einem Endabschnitt (12) des Haltebügels (11) ein Langloch (13) ausgebildet ist, in dem ein Befestigungsmittel geführt ist.

5. Zugmitteltrieb nach Anspruch 4, **dadurch gekennzeichnet, dass** die Längsachse des Langlochs (13) parallel zur Längsachse des an dem anderen Endabschnitt (15) angebrachten Befestigungsmittels angeordnet ist.

6. Zugmitteltrieb nach Anspruch 1, **dadurch gekennzeichnet, dass** das Feder- oder Spannelement (8) an einem Hebelarm (19) eines an der Haltevorrichtung schwenkbar gelagerten Hebels (18) angebracht ist, der durch ein an dem anderen Hebelarm (20) angreifendes Betätigungsmittel bewegbar ist, um den Zugmitteltrieb zu spannen.

7. Zugmitteltrieb nach Anspruch 6, **dadurch gekennzeichnet, dass** das Betätigungsmittel als Schraube (26) ausgebildet ist, die in eine mit einem Gewinde versehene, an der Haltevorrichtung angebrachte Durchgangsbohrung einschraubbar ist und mit ihrem Endabschnitt den Hebel (18) betätigt.

8. Zugmitteltrieb nach Anspruch 1, **dadurch gekennzeichnet, dass** das Feder- oder Spannelement (8) an einem an der Haltevorrichtung (27) angebrachten Träger (29) befestigt ist, der zum Spannen des Zugmitteltriebs relativ zu der Haltevorrichtung (27) verschiebbar ist.

9. Zugmitteltrieb nach Anspruch 8, **dadurch gekennzeichnet, dass** der Träger (29) ein Langloch (30) aufweist, in dem ein erstes Befestigungsmittel geführt ist, wobei der Träger (29) durch die Betätigung eines zweiten Befestigungsmittels verschiebbar ist.

10. Zugmitteltrieb nach Anspruch 9, **dadurch gekennzeichnet, dass** die Längsachse des Langlochs (30) parallel zur Längsachse des zweiten Befestigungsmittels angeordnet ist.

11. Zugmitteltrieb nach Anspruch 9 oder 10, **dadurch gekennzeichnet, dass** die Befestigungsmittel als Schrauben (31, 32) ausgebildet sind.

12. Zugmitteltrieb nach einem der vorhergehenden Ansprüche, **dadurch gekennzeichnet, dass** das Aggregat eine Wasserpumpe, ein Klimakompressor, eine Lenkhilfspumpe, eine Hochdruckeinspritzpumpe, ein Generator oder insbesondere ein Startergenerator ist.

## Claims

1. Traction drive, in particular for an internal combustion engine, with a looping means and at least two belt pulleys, one of which is connected to the shaft of an assembly which, on the one hand, is mounted pivotably on the housing of the internal combustion engine and, on the other hand, is supported on one end of a spring or tension element (8) which generates a prestressing force and of which the bearing point is adjustable in relation to the housing of the internal combustion engine, the spring or tension element (8) being fastenable to a holding device (27) attached or attachable to the housing of the internal combustion engine, **characterized in that** the holding device (27) is designed as a C-shaped holding yoke (11, 17), and the spring or tension element (8) is attachable or attached between the end portions (12, 15) of the C-shaped holding yoke (11, 17) which are fastened to the housing of the internal combustion engine.

2. Traction drive according to Claim 1, **characterized in that** the bearing point of the spring or tension element (8) is displaceable and/or pivotable and/or rotatable.

3. Traction drive according to Claim 1, **characterized in that** one end portion (15) of the holding device is fastenable by a fastening means in such a way that the holding device carrying the spring or tension element (8) is displaced for tensioning the traction drive.

4. Traction drive according to Claim 3, **characterized in that** a long hole (13), in which a fastening means is guided, is formed on one end portion (12) of the holding yoke (11).

5. Traction drive according to Claim 4, **characterized in that** the longitudinal axis of the long hole (13) is arranged parallel to the longitudinal axis of the fastening means attached to the other end portion (15).

6. Traction drive according to Claim 1, **characterized in that** the spring or tension element (8) is attached to one lever arm (19) of a lever (18) which is mounted pivotably on the holding device and which is movable by an actuating means actuating on the other lever arm (20), in order to tension the traction drive.

7. Traction drive according to Claim 6, **characterized in that** the actuating means is designed as a screw (26) which is screwable into a through-bore provided with a thread and formed on the holding device and which with the end portion of the said screw actuates the lever (18).

8. Traction drive according to Claim 1, **characterized in that** the spring or tension element (8) is fastened to a carrier (29) which is attached to the holding device (27) and which is displaceable in relation to the holding device (27) for tensioning the traction drive.

9. Traction drive according to Claim 8, **characterized in that** the carrier (29) has a long hole (30) in which a first fastening means is guided, the carrier (29) being displaceable as a result of the actuation of a second actuating means.

10. Traction drive according to Claim 9, **characterized in that** the longitudinal axis of the long hole (30) is arranged parallel to the longitudinal axis of the second fastening means.

11. Traction drive according to Claim 9 or 10,
**characterized in that** the fastening means are designed as screws (31, 32).

12. Traction drive according to one of the preceding claims, **characterized in that** the assembly is a water pump, an air-conditioning compressor, a power-steering pump, a high-pressure injection pump, a generator or, in particular, a starter alternator.

## Revendications

1. Commande de mécanisme de traction, notamment pour un moteur à combustion interne, comprenant un moyen d'enveloppement et au moins deux poulies à courroie, dont l'une est connectée à l'arbre d'une unité qui est montée d'une part de manière à pouvoir pivoter sur le carter du moteur à combustion interne et est supportée d'autre part sur une extrémité d'un élément de ressort ou de tensionnement (8) produisant une force de précontrainte, dont le point d'appui est réglable par rapport au carter du moteur à combustion interne, l'élément de ressort ou de tensionnement (8) pouvant être fixé sur un dispositif de retenue (27) monté ou pouvant être monté sur le carter du moteur à combustion interne, **caractérisé en ce que** le dispositif de retenue (27) est réalisé sous forme d'étrier de retenue en forme de C (11, 17) et l'élément de ressort ou de tensionnement (8) pouvant être monté ou étant monté entre les portions d'extrémité (12, 15) de l'étrier de retenue en forme de C (11, 17) qui sont fixées au carter du moteur à combustion interne.

2. Commande de mécanisme de traction selon la revendication 1, **caractérisée en ce que** le point d'appui de l'élément de ressort ou de tensionnement (8) peut être déplacé et/ou pivoté et/ou tourné.

3. Commande de mécanisme de traction selon la revendication 1, **caractérisée en ce qu'**une portion d'extrémité (15) du dispositif de retenue peut être fixée au moyen d'un moyen de fixation de telle sorte que le dispositif de retenue portant l'élément de ressort ou de tensionnement (8) soit déplacé en vue de tendre la commande de mécanisme de traction.

4. Commande de mécanisme de traction selon la revendication 3, **caractérisée en ce qu'**un trou oblong (13), dans lequel est guidé un moyen de fixation, est réalisé sur une portion d'extrémité (12) de l'étrier de retenue (11).

5. Commande de mécanisme de traction selon la revendication 4, **caractérisée en ce que** l'axe longitudinal du trou oblong (13) s'étend parallèlement à l'axe longitudinal du moyen de fixation monté sur l'autre portion d'extrémité (15).

6. Commande de mécanisme de traction selon la revendication 1, **caractérisée en ce que** l'élément de ressort ou de tensionnement (8) est monté sur un bras de levier (19) d'un levier (18) monté de manière pivotante sur le dispositif de retenue, lequel peut être déplacé par un moyen d'actionnement venant en prise sur l'autre bras de levier (20), afin de tendre la commande de mécanisme de traction.

7. Commande de mécanisme de traction selon la revendication 6, **caractérisée en ce que** le moyen d'actionnement est réalisé sous forme de vis (26) pourvue d'un filetage, qui peut être vissée dans un alésage traversant pratiqué sur le dispositif de retenue, et qui actionne le levier (18) avec sa portion d'extrémité.

8. Commande de mécanisme de traction selon la revendication 1, **caractérisée en ce que** l'élément de ressort ou de tensionnement (8) est fixé à un support (29) monté sur le dispositif de retenue (27), qui peut être déplacé pour tendre la commande de mécanisme de traction par rapport au dispositif de retenue (27).

9. Commande de mécanisme de traction selon la revendication 8, **caractérisée en ce que** le support (29) présente un trou oblong (30) dans lequel est guidé un premier moyen de fixation, le support (29) pouvant être déplacé par l'actionnement d'un deuxième moyen de fixation.

10. Commande de mécanisme de traction selon la revendication 9, **caractérisée en ce que** l'axe longitudinal du trou oblong (30) est disposé parallèlement à l'axe longitudinal du deuxième moyen de fixation.

11. Commande de mécanisme de traction selon la revendication 9 ou 10, **caractérisée en ce que** les moyens de fixation sont réalisés sous forme de vis (31, 32).

12. Commande de mécanisme de traction selon l'une quelconque des revendications précédentes, **caractérisée en ce que** l'unité est une pompe à eau, un compresseur de climatisation, une pompe auxiliaire, une pompe d'injection haute pression, un générateur ou en particulier un générateur démarreur.
